(19) Europäisches Patentamt
European Patent Office
Office européen des brevets

(11) Publication number: **0 338 115**
**A2**

(12) **EUROPEAN PATENT APPLICATION**

(21) Application number: **88107405.8**

(22) Date of filing: **07.05.88**

(51) Int. Cl.⁴: **C08J 5/04 , C08J 3/06 , C08J 5/24**

(30) Priority: **05.02.88 US 147153**

(43) Date of publication of application: **25.10.89 Bulletin 89/43**

(84) Designated Contracting States: **CH DE FR GB IT LI NL**

(71) Applicant: **BASF Aktiengesellschaft**
**Carl-Bosch-Strasse 38**
**D-6700 Ludwigshafen(DE)**

(72) Inventor: **Handermann, Alan C.**
**12115 Parks Farm Lane**
**Matthews North Carolina(US)**
Inventor: **Western, Edward D.**
**1191 Orchard Drive**
**Fort Mill South Carolina(US)**

(54) **Process for preparing a void-free pre-impregnated material comprising a thermoplastic polymer.**

(57) An improved multifilamentary fibrous material is formed having particles of a matrix-forming thermoplastic polymer substantially uniformly dispersed among adjoining filaments in ths absence of fusion bonding. The polymer particles initially ars dispersed in an aqueous medium containing an effective amount of a dissolved polyacrylic acid binding agent possessing a cross-linked molecular structure and the viscosity of the medium subsequently is substantially increased by the addition of ammonia or an alkyl amine to at least 50,000 cps. to form an improved gelled impregnation bath having a plastic flow characteristic with shear-thinning behavior wherein the polymer particles are substantially uniformly suspended. The resulting improved impregnation bath is caused to flow between the adjoining filaments of the multifilamentary fibrous material with a concomitant viscosity reduction which aids in the incorporation of the polymer particles. The concentration of the aqueous medium in the product is controlled to yield a uniform, handleable, drapable, tacky, and highly stable product. Upon the application of heat and pressure the improved product can be transformed into a fiber-reinforced composite article wherein the solid particles form the matrix phase. The utilization of the specified base to form the gelled impregnation bath has been found to make possible the formation of a composite article which exhibits significantly improved transverse properties (e.g., an improved 90° tensile strength).

EP 0 338 115 A2

# IMPROVEMENTS IN THE FORMATION OF PREIMPREGNATED MATERIAL COMPRISING PARTICULATE THERMOPLASTIC POLYMER SUITABLE FOR USE IN THE PRODUCTION OF A SUBSTANTIALLY VOID-FREE FIBER-REINFORCED COMPOSITE ARTICLE HAVING IMPROVED TRANSVERSE PROPERTIES

Numerous techniques have been proposed in the past for the formation of composite articles wherein fiber reinforcement is provided within a matrix of a polymeric material. Heretofore such composite articles commonly have been prepared wherein the matrix is a highly cross-linked thermosetting resin. During the formation of such composite articles the fibrous material commonly is impregnated with a liquid comprising the neat or dissolved uncured or partially-cured thermosetting resin to form a pliable, tacky prepreg which is subsequently placed in the desired configuration and is cured to a predetermined solid form over an extended period of time. The drapable and tacky nature of such prepregs has greatly aided in their use when forming composite articles having a complex configuration since adjoining layers tend to adhere well to each other and stay in place during the composite formation procedure. However, the resulting composite articles which employ a thermosetting resin in the matrix phase commonly are somewhat brittle and are found to provide deficient mechanical properties for some end use applications where toughness is of importance.

Accordingly, discussions can be found in the technical literature concerning the desirability of forming fiber-reinforced composite articles wherein the matrix phase is a thermoplastic polymer which can be relied upon to impart different mechanical properties to the composite article. When attempts have been made to impregnate reinforcing fibers with a molten thermoplastic polymer, it commonly is found that the melt viscosity of the polymer is too great to enable uniform impregnation between adjoining fibers. Also, when the melt is allowed to cool the resulting article is stiff and boardy and lacks the desirable pliable nature of a prepreg formed while using a thermosetting resin. When attempts have been made to dissolve the thermoplastic polymer in a solvent and to impregnate the fibrous material followed by evaporation of the solvent, difficulties also commonly have been encountered. For instance, some thermoplastic polymers are not readily soluble, uniform impregnation has been difficult to achieve, and complete solvent removal commonly has been a problem.

Blends of reinforcing fibers and thermoplastic fibers have been proposed for use in the formation of composite articles wherein the thermoplastic fibers are melted to form the matrix phase. Such blends inherently lack tack which is useful during layup to form a fiber-reinforced composite article.

Reference also can be found in the literature to providing the matrix-forming thermoplastic polymer as small particles which are mixed with the fibrous material prior to composite formation. Heretofore, such proposals commonly have not become a commercial reality primarily because of the inability to achieve uniform impregnation of the fibrous reinforcement, the tendency of the polymer particles to further segregate within the fibrous material and to separate from the fibrous material, and the necessity to melt the particles following placement among the fibers so as to immobilize the same. Such fusion has resulted in the formation of a stiff boardy product which lacks tack and is largely unsuitable for use in the formation of a composite article having a complex configuration. Also, when the impregnation is not uniform the polymer matrix will not be uniformly dispersed among fibers in the resulting composite article. This will result in a voidy product having resin-rich and resin-lean areas and unpredictable non-uniform mechanical properties.

British Patent No. 1,264,432 concerns the application of a dispersion of particles of a thermoplastic polymer to newly spun glass fibers.

British Patent No. 1,424,168 concerns the formation of a stiff sheet or tape prepreg wherein fibers are contacted with a bath containing water, thickening agent, and resin particles which immediately thereafter are melted at a temperature between 60 to 100°C. to cause the particles to adhere to the fibers. Uniform fiber impregnation would not be achieved and the stable tacky and pliable product of the present invention would not result.

U.S. Patent No. 4,292,105 concerns the impregnation of a fibrous material from a bath of the specified composition containing water, thickener, and polymer particles. The conditions described would not achieve uniform impregnation to produce a quality prepreg. Also, in the working examples the product would have no drapability since it was heated to fuse the polymer.

U.S. Patent No. 4,626,306 concerns the impregnation of a fibrous lap with resin particles by dipping in a bath containing the particles in the absence of a binding agent. Uniform fiber impregnation would not be achieved and the stable tacky and pliable product of the present invention would not result.

U.S. Patent No. 4,680,224 makes reference to the impregnation of fiber strands with a polymer powder or a slurry of powder. The patent is devoid of teachings concerning how such impregnation can be accomplished in the manner contemplated herein or how one could provide the improved product of the

present invention.

International Publication No. WO 86/03449 makes broad reference to the impregnation of fiber reinforcement with small polymer particles while dispersed in water. The product is said to be easily draped. However a technique for forming a uniform stable product is not addressed nor is ths desirability of having the product exhibit tack.

It is an object of the present invention to provide a method for the formation of an improved fibrous material suitable for the formation of an improved substantially void-free composite article comprising a plurality of adjoining substantially parallel reinforcing fibers.

It is an object of the present invention to provide an improved method for producing a fibrous product having solid particles of matrix-forming thermoplastic polymer substantially uniformly dispersed between adjoining filaments in a uniform and stable manner in the absence of fusion bonding suitable for use in the production of improved composite articles.

It is another object of the present invention to provide a method for producing an improved product containing solid particles of thermoplastic polymer substantially uniformly dispersed among adjoining filaments which is drapable and tacky at ambient conditions, is handleable without segregation of the particles within the fibrous material, and which upon the application of heat and pressure can be transformed into an improved substantially void-free composite article of a predetermined configuration which exhibits improved transverse properties (e.g., an improved 90° tensile strength).

It is a further object of the present invention to provide an improved fibrous material suitable for use in the formation of high performance fiber-reinforced parts having superior mechanical properties for use in aircraft, spacecraft, industrial machinery and automotive applications.

These and other objects, as well as the scope, nature and utilization of the present invention will be apparent to those skilled in the art from the following datailed description and appended claims.

It has been found that a method for the production of a fibrous material suitable for the formation of a substantially void-free composite article having improved transverse properties comprising a plurality of adjoining substantially parallel reinforcing filaments (e.g., a single end, a plurality of ends, a cloth, etc.) in association with a matrix-forming thermoplastic polymer (preferably a high performance engineering polymer) comprises:

(a) preparing a dispersion of solid particles of a thermoplastic polymer in an aqueous medium which contains an effective amount of dissolved polyacrylic acid binding agent possessing a cross-linked molecular structure,

(b) raising the pH of the aqueous medium through the addition of a base selected from the group consisting of ammonia, an alkyl amine having a boiling point less than 100° C., and mixtures of the foregoing, to form an impregnation bath wherein the viscosity of the resulting bath is substantially increased to at least 50,000 cps. through stiffening of the molecules of the binding agent and the impregnation bath has a plastic flow characteristic with shear-thinning behavior which is sufficient to substantially uniformly suspend the particulate thermoplastic polymer within the bath,

(c) impregnating the adjoining substantially parallel reinforcing filaments with the bath under conditions wherein the bath is caused to flow between the adjoining filaments by the application of work wherein the flow inherently results in a reduction of the viscosity of the bath which aids in the incorporation of the particulate thermoplastic between adjoining filaments, and

(d) controlling the content of the aqueous medium in the resulting fibrous material to provide a product having the particles of matrix-forming thermoplastic polymer substantially uniformly dispersed between adjoining filaments in the absence of fusion bonding which inherently (1) is drapable and tacky at ambient conditions, (2) is handleable without segregation of the particles within the fibrous material, and (3) which upon the application of heat and pressure can be transformed into an improved substantially void-free fiber-reinforced composite article of a predetermined configuration which exhibits an improved 90° tensile strength wherein the solid particles form the matrix phase.

A fibrous material suitable for the formation of a fiber-reinforced composite article having improved transverse properties is provided which comprises (a) a plurality of adjoining substantially parallel reinforcing filaments, (b) an effective amount of an ammonium or alkyl ammonium polyacrylate binding agent having stiffened molecules possessing a cross-linked molecular structure, (c) aqueous medium, (d) and solid particles of thermoplastic polymer (preferably a high performance engineering polymer) substantially uniformly dispersed between adjoining filaments in the absence of fusion bonding, which inherently (1) is drapable and tacky at ambient conditions, (2) is handleable without segregation of the particles within the fibrous material, and (3) which upon the application of heat and pressure can be transformed into an improved substantially void-free composite article of a predetermined configuration which exhibits an

improved 90° tensile strength wherein the solid particles form the matrix phase.

A fibrous material comprising a plurality of adjoining substantially parallel filaments initially is selected for use as fibrous reinforcement in the present invention. Such fibrous material may be provided as a single multifilamentary end, a plurality of multifilamentary ends each comprising a plurality of substantially parallel filaments, a cloth (e.g., woven, knitted, or braided) which incorporates a plurality of substantially parallel filaments, etc. For instance, fibrous tows or tapes of varying widths conveniently may be selected as the reinforcing fibrous material. A single tow of a relatively narrow width may be impregnated. Alternatively, wider fibrous materials having widths of 1 to 48 inches or more likewise may undergo such impregnation.

Those fibrous materials which heretofore have been used as fibrous reinforcement in the production of composite articles commonly are selected. For instance, representative fibrous materials include carbon, glass, aramid, silicon carbide, silicon nitride, boron nitride, other synthetic polymers capable of use at elevated temperatures, mixtures of these, etc. The preferred carbonaceous fibrous materials contain at least 90 percent carbon by weight which may comprise carbon which is either amorphous or graphitic in nature. Preferred carbonaceous fibrous materials commonly contain at least 3,000 (e.g., 3,000 to 12,000, or more) substantially parallel filaments per end. Such carbon filaments commonly are approximately 4 to 10 microns in diameter. Representative preferred carbonaceous fibrous materials for use in connection with the present invention are Celion carbon fibers which are commercially available from BASF Structural Materials, Inc., Charlotte, North Carolina, U.S.A. Also, glass filaments which are capable of being readily impregnated by the flow of the impregnation bath described hereafter may be selected. Such glass filaments commonly have a diameter of approximately 10 to 20 microns (e.g., 12 to 13 microns). Suitable aramid fibers are commercially available from E.I. DuPont, Wilmington, Delaware, U.S.A., under the Kevlar trademark and may have a diameter as low as 5 to 8 microns. The fibrous material preferably is unsized, or if a size is present such size does not preclude the ready insertion of the thermoplastic polymer particles between adjoining filaments during the impregnation step (described hereafter). It is, of course, important that the reinforcing fibers selected well retain their fibrous integrity and reinforcing properties at the temperature used to fuse the thermoplastic polymer while in association with such fibers during composite formation. For instance, in a preferred embodiment the fibrous reinforcement can withstand temperatures greater than 537.8° C. (i.e., 1000° F).

During the preparation of the impregnation bath employed in the process of the present invention, small particles of a matrix-forming thermoplastic polymer initially are dispersed in an aqueous medium containing a dissolved polyacrylic acid binding agent possessing a cross-linked molecular structure and having a relatively low viscosity. Thereafter the viscosity of the dispersion substantially is increased to form a stable improved impregnation bath having a plastic flow characteristic with shear-thinning behavior (as described hereafter).

The solid particulate matrix-forming thermoplastic polymer which is selected for use in the present invention when in association with the fibrous reinforcement following the application of heat and pressure is capable of forming a substantially void-free fiber-reinforced composite article wherein the polymer particles are transformed into the matrix phase. Such substantially void-free character is present when the resulting composite article exhibits less than two percent voids by volume. The particulate thermoplastic polymer selected may exhibit a distinct molten phase upon the application of heat in the absence of a cross-linking agent. Alternatively, the particulate thermoplastic polymer may be thermosinterable and exhibit the ability to consolidate when the adjoining particles are heated under pressure.

The thermoplastic polymer selected may be polyethylenes, polypropylenes, polyesters (e.g., polyalkylene terephthalates, such as polyethylene terephthalates, polybutylene terephthalates, etc.), polyamides (e.g., nylon 6, nylon 66, nylon 610, etc.), polyvinyl chlorides, polystyrenes, polyoxymethylenes, etc., and mixtures of these. Copolymers, terpolymers, etc. of such polymers likewise are included. Such thermoplastic polymers commonly exhibit a glass transition temperature above 25° C. and a melting temperature above 70° C.

In a preferred embodiment of the present invention the particulate thermoplastic polymer is a high performance engineering polymer. Such polymers commonly exhibit a glass transition temperature above 80° C. (most preferably above 140° C.) and a melting temperature above 150° C. (most preferably above 200° C.). Representative, high performance engineering polymers include polysulfones, polyether sulfones, polyphenylene oxides, polyetherimides, anisotropic melt-forming polyesters, anisotropic melt-forming polyesteramides, anisotropic melt-forming polycarbonates, polycarbonates, polyimides, polyamideimides, polyimidesulfones, polyarylenesulfides, polyalkyleneetherketones, etc., and mixtures of these. Copolymers, terpolymers, etc. of such polymers likewise are included. Commonly, polyimides and polyamideimides are thermosinterable and may undergo a linear addition reaction when heated. Particles of these polymers may undergo consolidation to form a continuous matrix when adjoining particles are heated under pressure.

The matrix-forming thermoplastic polymer is provided as small solid particles having a particle size in the range of approximately 0.1 to 100 microns, and preferably a particle size of 0.1 to 20 microns. In a particularly preferred embodiment at least 50 percent of the particles are smaller than 10 microns. Accordingly, the mean particle size preferably is less than 50 microns. Those thermoplastic polymers exhibiting higher melt viscosities advantageously are provided as extremely small particles. Cryogenic grinding or other known grinding or particle-forming techniques may be employed to provide the thermoplastic polymer in an extremely fine form.

The aqueous medium in which the solid particles of thermoplastic polymer are dispersed contains water as the major component and optionally may include in a minor concentration one or more water-miscible organic liquids which do not interfere with the desired uniform impregnation, e.g., methanol, ethanol, isopropanol, ethylene glycol, etc. In some instances, the presence of such water-miscible organic liquids, because of their increased volatility, may expedite the removal of a portion of the aqueous medium following impregnation, should this be desired. However, in a preferred embodiment the aqueous medium is substantially pure water.

A polyacrylic acid binding agent possessing a cross-linked molecular structure is dissolved in an effective concentration in the aqueous medium in which the solid particles of thermoplastic polymer are initially dispersed while at a relatively low viscosity. Such binding agent is capable of facilitating a substantial increase in the viscosity of the dispersion during a subsequent step of the process to form an improved highly stable gelled impregnation bath having a plastic flow characteristic with shear-thinning behavior wherein the thermoplastic polymer particles are substantially uniformly suspended. As described hereafter, such increase in viscosity during the specifically defined improved process of the present invention is accomplished through the addition of ammonia, an alkyl amine having a boiling point of less than 100 °C., or mixtures of these. The resulting impregnation bath containing the dissolved polymeric binding agent, when caused to flow between adjoining filaments of the fibrous material by the application of work, exhibits a shear-thinning behavior which inherently results in a reduction of the impregnation bath viscosity and thereby greatly aids in the incorporation of the solid particulate thermoplastic polymer between adjoining filaments. The binding agent when present in the resulting impregnation bath also causes the filaments to adhere well to each other and to exhibit tacky properties in the presence of the aqueous medium.

The polyacrylic acid binding agent selected for use in the improved process of the present invention is water soluble and possesses a cross-linked molecular structure. Such binding agent may be a water-soluble carboxyl vinyl polymer (sometimes termed carboxyl polymethylene) of the following basic structure:

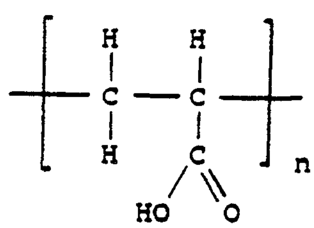 .

The crosslinks are slight in nature and commonly are provided by polyalkenyl polyether at a level which allows for water solubility. When heretofore used in cosmetic products, this material has been known as "carbomer". This polymeric binding agent is commercially available from B.F. Goodrich, Cleveland, Ohio, U.S.A. under the Carbopol trademark, and is described in its May, 1986 publication entitled "Carbopol® Water Soluble Resins". Representative, water-soluble binding agents of this type which are available from B.F. Goodrich are Carbopol 910, Carbopol 934, Carbopol 940, and Carbopol 941. The polyacrylic acid binding agent possessing a cross-linked molecular structure advantageously may possess a molecular weight from 450,000 to 4,000,000, and preferably from 750,000 to 3,000,000. Such binding agents commonly possess a coiled molecular structure when purchased.

The polyacrylic acid binding agents (as described) employed in the present invention commonly are provided in the dispersion prior to the substantial increase in viscosity in a concentration of approximately 0.01 to 5 percent (e.g., 0.01 to 2 percent) based upon the total weight of the dispersion. If the concentration of such binding agent is too low, the desired subsequent substantial increase in viscosity will not be possible, and the product will not possess the desired physical properties. Also, if the concentration of such binding agent is too great, no concomitant advantage will be realized and the binding agent may interfere with the desired composite properties. The higher molecular weight polyacrylic acid binding agents (as described) offer the advantage of functioning at lesser concentrations. Accordingly, in a particularly

preferred embodiment the polyacrylic acid binding agent possessing a cross-linked molecular structure is present in the initial dispersion in a concentration of approximately 0.1 to 0.8 percent by weight.

The particulate thermoplastic polymer commonly is provided in the initial dispersion containing the dissolved polyacrylic acid binding agent in a concentration of approximately 5 to 50 percent by weight based upon the total weight of the dispersion, and preferably in a concentration of approximately 10 to 30 percent by weight (e.g., approximately 15 percent by weight).

The initial dispersion may optionally contain a surfactant in a minor concentration to aid in the wetting of the particles of the thermoplastic polymer. For instance, the surfactant may be present in a concentration of approximately 0.005 to 0.5 percent by weight of the total dispersion, and preferably in a concentration of 0.01 to 0.2 percent by weight. Any surfactant may be employed provided it does not interfere with the subsequent viscosity increase or otherwise adversely influence the resulting product such as through the creation of an excessive amount of foam or bubbles. Representative surfactants which may be used to advantage in the present process include surfactants based on alkylaryl polyether alcohols (e.g., alkyl phenoxypolyethoxy ethanol), sulfonates and sulfates. A surfactant commercially available from the Rohm and Haas Company, Philadelphia, Pennsylvania, U.S.A., under the Triton X100 trademark, may be used to advantage.

A finely divided particulate filler may also be included in the impregnation bath in order to modify the properties of the resulting composite article. Representative fillers include carbon powder; metallic powders, such as aluminum, titanium, etc.; silicates; silicon; tungsten carbide; porcelain; clay; feldspar; quartz; titanates; mica; glass beads; silica; etc.; and discontinuous fibers, such as inorganic or organic fibers.In a preferred embodiment such fillers are not employed.

The viscosity of initial dispersion is sufficiently low so that the resin particles can be thoroughly dispersed throughout the aqueous medium while using moderate agitation. Particularly good results are obtained when both the polyacrylic acid binding agent (as described) and the particulate thermoplastic polymer are blended together as solid particles and are thereafter introduced into the aqueous medium with moderate agitation. Commonly, the viscosity of the initial dispersion is well below 50,000 cps. when tested using a Rheometrics Stress Rheometer (Model RSR/M) while operating at a shear rate of 0.01 reciprocal second. Preferably, the viscosity of the initial dispersion is no more than 30,000 cps., and most preferably no more than 20,000 cps. (e.g., 2,000 to 20,000 cps.) in accordance with such test conditions. However, satisfactory results are achieved at greater viscosities when the initial dispersion exhibits a sufficiently high shear-thinning behavior to enable good dispersion of the particles of thermoplastic polymer. See, for instance, the process embodiment reported in Example II.

Once the dispersion of the particulate thermoplastic polymer is achieved under such relatively low viscosity conditions, the viscosity is substantially increased from the viscosity level initially exhibited to form an improved impregnation bath having a plastic flow characteristic with shear-thinning behavior which is sufficient to substantially uniformly suspend the particulate thermoplastic polymer within the bath. More specifically, the viscosity of the dispersion is raised to at least 50,000 cps. when tested using a Rheometrics Stress Rheometer at a shear rate of 0.01 reciprocal second. Such viscosity increase preferably is at least 50 percent, and viscosity increases of 1.5 to 25 times, or more, may be utilized. Commonly, the resulting viscosity will be within the range of approximately 50,000 to 3,000,000 cps. when using a Rheometrics Stress Rheometer at a shear rate of 0.01 reciprocal second, and preferably within the range of 50,000 to 1,000,000 cps. (e.g., 50,000 to 250,000 cps.). Such viscosity increase also is accompanied by a significant increase in the tackiness and binding properties of the polyacrylic acid binding agent.

In accordance with the concept of the present invention the viscosity of the previously formed dispersion of thermoplastic polymer particles is substantially increased through the addition of a base selected from the group consisting of ammonia, an alkyl amine, and mixtures of the foregoing. Representative alkyl amines suitable for use in the improved process of the present invention having a boiling point less than 100 °C. include methylamine, ethylamine, trimethylamine, and mixtures of these. Metallic bases, such as sodium hydroxide, are to be avoided when practicing the improved process claimed herein. As demonstrated in the examples, the utilization of the specific base in the context of the present invention has been found to make possible the formation of a composite article which exhibits superior mechanical properties particularly in the transverse direction wherein increased adhesion between the fibrous reinforcement and the thermoplastic polymer matrix is of prime importance. The ammonia or alkyl amine preferably is dissolved in an aqueous solvent when added to the previously formed dispersion of solid particles of a thermoplastic polymer in an aqueous medium which contains an effective amount of the dissolved polyacrylic acid binding agent (as described). In a particularly preferred embodiment the ammonia and/or alkyl amine is provided in a relatively dilute concentration in water of approximately 5 to 20 percent by weight when added to the dispersion of thermoplastic polymer particles. Also, in a particularly preferred

embodiment ammonia is dissolved in water to provide an ammonium hydroxide solution.

The viscosity of the dispersion is caused to increase as the ammonia and/or alkyl amine interacts with the dissolved polyacrylic acid binding agent (as described) to form an ammonium or alkyl ammonium polyacrylate binding agent having stiffened molecules possessing a cross-linked molecular structure. For instance, the dispersion of particulate thermoplastic polymer and dissolved polyacrylic acid binding agent commonly exhibits an acidic pH which falls within the range of approximately 2.5 to 3.5. When the ammonia and/or alkyl amine is added to the initial dispersion, the corresponding adjustment in the pH causes the stiffening (i.e., uncoiling and extension) of the previously coiled molecules of such binding agent which substantially raises the viscosity of the dispersion with the particles of thermoplastic polymer being substantially uniformly suspended in a highly stable manner within the resulting impregnation bath. For instance, sufficient ammonia and/or alkyl amine may be added to the dispersion to accomplish some neutralization and to raise the pH to within the range of 4 to 10, and most preferably within the range of 6 to 8. This neutralization step also results in a dramatic increase in the binding and tackifying properites.

The plastic flow behavior of the resulting impregnation bath provides the particulate thermoplastic polymer in a vehicle which is capable of bringing about the impregnation of the fibrous material in a highly uniform manner over an extended period of time. The particulate thermoplastic polymer is well suspended therein, thereby making possible the formation of a consistent and uniform product.

In a preferred embodiment, the resulting impregnation bath possesses a plastic flow rheology characterized by a Brookfield Yield Value above the minimum value required to permanently suspend even the largest particles of the thermoplastic polymer present in the static bath while under the influence of gravity. Such Minimum Brookfield Yield Value can be theoretically calculated for any specific particle of thermoplastic polymer in accordance with the following equation:

$$\text{Minimum Brookfield Yield Value} = [23.6\ R(D-D_o)g]^{\frac{2}{3}}$$

with units in dynes/cm.$^2$, where:

R = Particle Radius (cm.),
D = Particle Density (gm./cc.),
$D_o$ = Suspending Medium Density (gm./cc.), and
g = Gravitational Constant = 980 cm./sec.$^2$.

For example, the Minimum Brookfield Yield Value for a 50 micron particle of polyetheretherketone (D = 1.30 gm./cc.) is approximately 6.6 dynes/cm.$^2$. The Brookfield Yield Value for any dispersion can be determined with sufficient accuracy using a Brookfield RVT viscometer and spindle No. 1 in accordance with the following equation:

$$\text{Brookfield Yield Value} = \frac{\text{Apparent Viscosity at 0.5 RPM} - \text{Apparent Viscosity at 1.0 RPM}}{100}.$$

In preferred embodiments the Brookfield Yield Value of the impregnation bath is at least 1.5 times the Minimum Brookfield Yield Value, and most preferably at least 2 times the Minimum Brookfield Yield Value (e.g., 2 to 10 times, or more) in order to build further stability into the improved impregnation bath which is utilized in the process of the present invention.

Next, the adjoining substantially parallel reinforcing filaments are impregnated with the improved impregnation bath under conditions wherein the bath is caused to flow between adjoining filaments by the application of work wherein the bath flow inherently results in a substantial reduction of the relatively high viscosity of the bath which aids in the incorporation of the particulate thermoplastic polymer between adjoining filaments. Accordingly, the improved impregnation bath exhibits a shear-thinning behavior. For instance, a dispersion viscosity of 100,000 cps. using a Rheometrics Stress Rheometer (Model RSR/M) at a shear rate of 0.01 reciprocal second for such impregnation bath typically will be reduced to less than 500 cps. at a shear rate of 500 reciprocal seconds. This behavior permits the particulate thermoplastic polymer from settling while in the static bath at zero shear rate conditions and allows the particles of thermoplastic polymer to be impregnated between adjoining filaments when work is applied to the bath. Also, once the zero shear condition is reestablished within the resulting fibrous material, a highly stable prepreg product results as discussed herein.

The improved impregnation bath may be caused to flow between the adjoining filaments of the fibrous material by any one of a number of techniques. Preferably, the adjoining filaments are somewhat spread at the time of impregnation. The impregnation may be carried out while the fibrous material is immersed in the

impregnation bath and the work is applied as the adjoining filaments while under tension are passed in contact with at least one solid member (e.g., a stationary rod or roller). Alternatively, the impregnation may be carried out as the filaments contact the outer surface of at least one perforated tube through which the bath is forced, or the filaments while in contact with the impregnation bath are passed through a die and/or between one or more sets of rollers. If desired, the impregnation of the fibrous material may be carried out immediately following fiber formation with the fibers passing to the impregnation apparatus. Suitable apparatus for accomplishing the impregnation of the adjoining filaments are disclosed in United States Serial No. 114,362, filed November 4, 1987, which is herein incorporated by reference.

Next, the content of the aqueous medium in the resulting fibrous material is controlled to provide a product having the particles of matrix-forming thermoplastic polymer substantially uniformly dispersed between adjoining filaments in ths absence of fusion bonding. Following impregnation, the concentration of aqueous medium in the resulting fibrous material is controlled at the desired level. Commonly, such aqueous medium within the fibrous material is controlled at a concentration above approximately 40 percent by weight, and preferably within the range of approximately 10 to 70 percent by weight based upon the total weight. In a particularly preferred embodiment, the aqueous medium is provided at a concentration within the range of approximately 40 to 60 percent by weight.

Commonly, the fibrous material following impregnation is dried under conditions wherein a portion of the aqueous medium is volatilized and then is immediately used for composite formation, or is otherwise stored under conditions wherein it is sealed and further loss of the aqueous medium is minimized or prevented prior to composite formation.

In another embodiment of the process the resulting fibrous material following drying to remove aqueous medium is subsequently contacted (e.g., sprayed) with additional aqueous medium in order to maintain the desired characteristics. Accordingly, the quantity of aqueous medium within the product can be reduced or increased at will to fine tune the characteristics of the resulting product to best meet the needs of a specific end use.

Commonly, the resulting product which is suitable for the formation of a substantially void-free composite article contains the particles of matrix-forming thermoplastic polymer in a concentration of approximately 6 to 45 percent by weight, and preferably in a concentration of approximately 8 to 30 percent by weight (e.g., approximately 15 percent by weight). Commonly, the resulting product contains the fibrous material in a concentration of approximately 15 to 55 percent by weight (e.g., approximately 20 to 30 percent by weight), and the polyacrylic acid binding agent (as described) in a concentration of approximately 0.02 to 2.2 percent by weight (e.g., approximately 0.04 to 1.5 percent by weight).

The resulting product prior to composite formation is drapable at ambient conditions and can readily be shaped in a manner similar to that of a prepreg formed using an uncured or partially-cured thermosetting resin. Such drapable character preferably is evidenced by a flexural rigidity of less than 15,000 mg.•cm., and most preferably less than 10,000 mg.•cm. (e.g., less than 5,000 mg.•cm.) when tested in accordance with ASTM D1388. This enables the formation of a composite article by filament winding or a composite article wherein the impregnated fibrous material must assume a complex configuration within a mold. The tacky nature of the product can be attributed to gelled nature of the impregnation bath. This enables adjoining layers of the fibrous material to well adhere and to remain at a predetermined location during composite formation. In a preferred embodiment the resulting fibrous material passes the tack test of NASA Technical Bulletin 1142. Also, the product prior to composite formation is highly stable and handleable without segregation of the particles within the fibrous material. Such absence of segregation leads to the retention of the particles of thermoplastic polymer, prevents their migration within the fibrous material, and leads to the formation of a highly uniform composite article with no significant variation throughout its cross section.

Substantially void-free composite articles can be formed from the product of the present invention upon the application of heat which exceeds the melting temperature of the thermoplastic particles or reaches the temperature at which the thermoplastic particles become heat-sinterable. Such temperature should be below that at which any significant polymer degradation occurs. The major portion of the aqueous medium may be removed when the fibrous material is either inside or outside the mold. During composite formation pressure also is applied and a means commonly is provided for the removal of volatilized aqueous medium together with ammonia or amine and any other gaseous by-products present therein. Typical mold pressures during composite formation are approximately 0.3 to 4 MPa (e.g., 0.6 to 2.5 MPa). The substantially void-free nature of the product is manifest by less than a two percent void content in the solid composite article which is produced (preferably less than one percent void content).

In a preferred embodiment the product of the present invention is capable of forming a composite article having a 0° flexural strength of at least 60 percent of the theoretical value when tested in

accordance with ASTM D790-84a, Method II, Procedure A, at a span-to-depth ratio of 32:1, and most preferably at least 70 percent of the theoretical value.

The theoretical flexural strength value and the percent translation of the theoretically attainable flexural strength equations have been simplified to the following for ease of calculation:

$S_F$(theoretical) = $V_f S_f$, where

$S_F$(theoretical) = theoretical flexural strength of the composite,

$S_f$ = tensile strength of fiber, and

$V_f$ = volume fraction of the fiber.

In order to determine the percent translation of the theoretically attainable flexural strength the following equation is used:

$$\text{Percent Flexural Strength Translation} = \frac{S_f\ (\text{ASTM D790})}{S_F\ (\text{theoretical})} \times 100.$$

In a preferred embodiment the product of the present invention is capable of forming a composite article having a 0° flexural modulus of at least 80 percent of the theoretical value when tested in accordance with ASTM D790-84a, Method II, Procedure A, at a span-to-depth ratio of 32:1, and most preferably at least 85 percent of the theoretical value.

The theoretical flexural modulus value of a fiber-reinforced composite can be defined as follows:

$E_F$(theoretical) = $K_F[V_f E_f + (1-V_f)Em]$, where $K_F = 2/(1 + \sqrt{E_T/E_c})$,

$E_F$(theoretical) = theoretical flexural modulus of the composite,

$E_T$ = tensile modulus of the composite,

$E_c$ = compressive modulus of the composite,

$E_f$ = tensile modulus of the fiber,

$E_m$ = flexural modulus of the matrix, and

$V_f$ = volume fraction of the fiber.

In order to determine the percent translation of the theoretically attainable flexural modulus the following equation is used:

$$\text{Percent Flexural Modulus Translation} = \frac{E_f\ (\text{ASTM D790})}{E_F\ (\text{theoretical})} \times 100.$$

The improved composite article mechanical properties made possible by the improvement of the present invention are particularly apparent when one examines tha 90° tensile strength values in accordance with ASTM D3039. In a preferred embodiment, the product of the present invention is capable of forming a composite article having a 90° tensile strength in accordance with ASTM D3039 of at least 60 percent of the theoretical value, and most preferably at least 80 percent of the theoretical value. As indicated in Comparative Example I, metallic bases, such as sodium hydroxide, lead to the exhibition of considerably lower values.

The theoretical 90° tensile strength value of a fiber-reinforced composite can be defined as follows:

$S_{TT}$(theoretical) = $S_{TM}$, where

$S_{TT}$(theoretical) = theoretical 90° tensile strength of the composite, and

$S_{TM}$ = tensile strength of the thermoplastic polymer used in the matrix.

In order to determine the percent translation of the theoretically attainable tensile strength the following equation is used:

$$\text{Percent 90° Tensile Strength Translation} = \frac{S_{TT}\ (\text{ASTM D3039})}{S_{TT}\ (\text{theoretical})} \times 100.$$

The theory whereby the use of ammonia and/or an alkyl amine to form a gelled impregnation bath leads to the formation of a composite article which exhibits significantly improved mechanical properties (particularly in the transverse direction) is considered to be complex and incapable of simple explanation. It is believed, however, that the improvement in transverse properties can be traced to the creation of

enhanced adhesion between the fibers and the thermoplastic polymer matrix which is lacking if a metallic base, such as sodium hydroxide, is utilized.

The following examples are presented as specific illustrations of the claimed invention. It should be understood, however, that the invention is not limited to the specific details set forth in the examples.

## EXAMPLE I

300 grams of solid particles of polyetheretherketone thermoplastic polymer are dry blended with 24 grams of solid particles of water-soluble polyacrylic acid binding agent possessing a molecular structure which is cross-linked with polyalkenyl polyether. The polyetheretherketone is commercially available from Imperial Chemical Industries, London, England, as Grade 380 KX1032 Victrex polymer, possesses a glass transition temperature of approximately 143° C., and possesses a melting temperature of approximately 343° C. The polyetheretherketone is ground to a mean particle size of 14 microns with the largest particle size being 75 microns. The polyacrylic acid binding agent is commercially available from B.F. Goodrich as Grade 910 Carbopol polymer and has a molecular weight of approximately 750,000.

An alkyl phenoxypolyethoxy ethanol surfactant in a quantity of 0.6 gram is dissolved in 1700 grams of distilled water and the blend of solid particles of thermoplastic polymer and polyacrylic acid binding agent are added while being agitated at a moderate speed. The surfactant is commercially available from Rohm and Haas Company as Triton X100 surfactant. Such mixing is conducted for two hours in order to completely dissolve ths polyacrylic acid binding agent and to disperse the particles of thermoplastic polymer. The pH of the resulting dispersion is found to be 3.0. The viscosity of the dispersion is found to be 15,000 cps. when measured with a Rheometrics Stress Rheometer (Model RSR/M) while operating at a shear rate of 0.01 reciprocal second. The Brookfield Yield Value of the dispersion is found to be 8 dynes/cm.$^2$ when tested on a Brookfield RVT viscometer as previously described.

48 grams of a 9.3 percent ammonium hydroxide solution next are added to the dispersion while undergoing moderate agitation. This raises the pH of the dispersion to 7.3 to form an improved gelled impregnation bath wherein the viscosity of the resulting bath is substantially increased to approximately 240,000 cps. (as measured with a Rheometrics Stress Rheometer Model RSR/M at a shear rate of 0.01 reciprocal second) through an extension and stiffening of the molecules of the dissolved polyacrylic acid binding agent. The resulting impregnation bath exhibits plastic flow with shear-thinning behavior. The neutralization step results in a dramatic improvement of the binding and tackifying properties. The Brookfield Yield Value of the dispersion is found to be 125 dynes/cm.$^2$ when tested on a Brookfield RVT viscometer as previously described. It can be calculated ae previously described that the Minimum Brookfield Yield Value required to suspend ths largest particles of thermoplastic polymer present in the dispersion is 8.7 dynes/cm.$^2$. Accordingly, the resulting impregnation bath is highly stable and the actual Brookfield Yield Value exceeds the calculated Minimum Brookfield Yield Value to suspend even the largest thermoplastic polymer particles present by more than 14 times.

The resulting impregnation bath is next poured into an impregnation apparatus similar to that illustrated in Fig. 25 of the United States Serial No. 114,362, filed November 4, 1987, containing several stationary non-rotating bars immersed within the bath.

A tow of approximately 12,000 substantially continuous Celion carbon filaments in unsized form available from BASF Structural Materials, Inc., under the designation G30-500 is selected to serve as the fibrous reinforcement. The filaments of the tow possess a diameter of approximately 7 microns. This tow is fed in the direction of its length from a single bobbin located on a tension controlled creel, and while under tension is passed through the impregnation bath while coming in contact with the stationary non-rotating bars immersed within the bath. Following passage over the bars the multifilamentary tow is passed through a rectangular metallic die having polished surfaces situated at the bottom of the impregnation bath. While passing over the bars and through the die the substantially parallel carbon filaments are impregnated with the impregnation bath as the bath is caused to flow between adjoining filaments. Such flow inherently results in a significant reduction in the viscosity of the impregnation bath which greatly aids in the incorporation of the solid polymer particles between the carbon filaments. Once the flow is discontinued the thermoplastic polymer particles tend to be locked within the fibrous material in a highly uniform manner. The die also aids in the control of the width and thickness of the resulting impregnated tow.

The resulting impregnated tow is next wound on a rotating drum using a transversing laydown guide to form a rectangular sheet having a width of approximately 30.5 cm.

It is found that the resulting sheet product following drying for two hours at ambient conditions to

remove a portion of the water contains approximately 27.0 percent carbon fibers by weight, approximately 15.0 percent solid thermoplastic polymer particles by weight, approximately 1.2 percent ammonium polyacrylate binding agent having stiffened molecules possessing a cross-linked molecular structure by weight, and approximately 56.8 percent water by weight. This product contains the matrix-forming thermoplastic polymer particles substantially uniformly dispersed between adjoining fibers in the absence of fusion bonding and can be handled without the segregation of the particles. When tested in accordance with the drape test of ASTM D-1388 the product is found to be highly drapable both in the 0° and 90° directions and to exhibit a flexural rigidity of approximately 10,000 mg.•cm. Also, the product is tacky and is found to pass the tack test of NASA Technical Bulletin 1142.

Next, the product while in a flat configuration is allowed to substantially completely dry to a water content of approximately 2 percent while at ambient conditions while containing the thermoplastic polymer particles well bound therein. Eleven flat plies containing approximately 35.6 percent by weight of the thermoplastic particles measuring approximately 10.2 cm. x 10.2 cm. are laid up in the 0° direction in a matched metal mold at room temperature conditions and placed in a platen press. The mold is heated to 290° C. with no applied pressure, and is held at 290° C for 60 minutes with no applied pressure in order to allow ammonia and other volatiles to escape. A pressure of 1.4 MPa next is applied and the temperature is gradually raised to 370° C. where it is held for another 60 minutes. The mold is then cooled to 50° C. while continuing to maintain the 1.4 MPa pressure. The mold finally is removed from the press and the resulting composite article in the form of a panel is removed from the mold.

Alternatively, it would be possible to lay up the impregnated fibrous material prior to drying while still in the wet tacky form. Under such conditions the open mold containing the plies initially could be heated at approximately 120 to 150° C. for approximately 1 hour in the absence of pressure to further assist in the removal of volatiles. Such procedure would be particularly advantageous when forming a composite article of a more complex configuration wherein drape and tack are of greater importance.

The resulting panel formed from the impregnated product which is dried prior to placing in the mold has a thickness of 0.173 ± 0.001 cm., a theoretical carbon fiber volume of 56.9 percent, and a void content of less than 0.5 percent.

Test specimens are cut from the panel and four point, 0° flexural tests are conducted in accordance with ASTM D790-84a, Method II, Procedure A, using a span-to-depth ratio of approximately 32:1 and a crosshead speed of approximately 0.5 cm./minute, and 90° tensile tests were conducted in accordance with the procedure of ASTM D3039. A 0° flexural strength of 1670 MPa is exhibited which represents a 76 percent translation of that theoretically attainable. A 0° flexural modulus of 114 GPa is exhibited which represents a 87 percent translation of that theoretically attainable. A 90° tensile strength of 63 MPa is exhibited which represents a 72 percent translation of that theoretically attainable. Such 90° tensile strength value evidences superior adhesion between the carbon fibers and the matrix of thermoplastic polymer.

## COMPARATIVE EXAMPLE I

Example I is substantially repeated while using an aqueous solution of sodium hydroxide rather than ammonium hydroxide as the base which is employed to substantially raise the pH of the aqueous medium, to stiffen the molecules of the polyacrylic acid binding agent (as described), and to substantially increase the viscosity of the impregnation bath. This example is presented solely for comparative purposes to demonstrate the improvement made possible by the present invention and corresponds to Example II of U.S. Serial No. 114,362, filed November 4, 1987.

More specifically, 1133 grams of solid particles of polyetheretherketone thermoplastic polymer were dry blended with 48 grams of solid particles of the water-soluble polyacrylic acid binding agent possessing a molecular structure which is cross-linked with polyalkenyl polyether (i.e., 910 Carbopol polymer). 1.2 grams of the alkyl phenoxypolyethoxy ethanol surfactant are dissolved 3400 grams of distilled water and the blend of thermoplastic polymer and polyacrylic acid binding agent are added. The pH of the resulting dispersion is 3.2, and the Brookfield Yield Value is found to be 7.5 dynes/cm.$^2$ when tested on a Brookfield RVT viscometer as previously described.

Upon the addition of 118 grams of a 10 percent sodium hydroxide solution the pH is raised to 6.0, and the viscosity of the resulting impregnation bath is raised to 205,000 cps. The Brookfield Yield Value is found to be 90 dynes/cm.$^2$. It can be calculated that the Minimum Brookfield Yield Value required to suspend the largest particles is approximately 8.5 dynes/cm.$^2$. Accordingly, the resulting impregnation bath is highly stable and the actual Brookfield Yield Value exceeds the calculated Minimum Brookfield Yield Value to

suspend even the largest thermoplastic polymer particles present by more then 10 times.

The resulting sheet product following drying for two hours at ambient conditions to remove a portion of the water contains approximately 26.6 percent carbon fibers by weight, approximately 15.4 percent solid thermoplastic particles by weight, approximately 0.8 percent polyacrylic acid binding agent in the form of sodium polyacrylate by weight, and approximately 57.2 percent water by weight. This product contains the matrix-forming thermoplastic polymer particles substantially uniformly dispersed between adjoining fibers in the absence of fusion bonding and can be handled without the segregation of the particles. When tested in accordance with the drape test of ASTM D-1388 the product is found to be highly drapable both in the 0° and 90° directions and to exhibit a flexural rigidity of approximately 10,000 mg.•cm. Also, the product is tacky and is found to pass the tack test of NASA Technical Bulletin 1142.

The product while in a flat configuration is allowed to substantially completely dry to a water content of approximately 2 percent while at ambient conditions while containing the thermoplastic polymer particles well bound therein. Twelve flat plies containing approximately 36.6 percent by weight of the thermoplastic particles measuring approximately 30.5 cm. x 30.5 cm. are laid up in the 0° direction in the matched metal mold at room temperature conditions and placed in a platen press. The mold is heated to 290° C. with no applied pressure, and is held at 290° C. for 60 minutes with no applied pressure in order to allow volatiles to escape. A pressure of 1.4 MPa next is applied and the temperature is gradually raised to 370° C. where it is held for another 60 minutes. The mold is then cooled to 50° C. while continuing to maintain the 1.4 Mpa pressure. The mold finally is removed from the press and the resulting composite article in the form of a panel is removed from the mold.

The resulting panel formed from the impregnated product has a thickness of 0.180 ± 0.001 cm., a theoretical carbon fiber volume of 55.8 percent, and a void content of less than 0.5 percent.

Test specimens are cut from the panel and are evaluated in accordance with the procedures previously described. A 0° flexural strength of 1340 MPa is exhibited which represents a 62 percent translation of that theoretically attainable. A 0° flexural modulus of 113 GPa is exhibited which represents a 87 percent translation of that theoretically attainable. Finally, the 90° tensile test revealed a tensile strength of 24 MPa which represents only a 28 percent translation of that theoretically attainable. Accordingly, the resulting composite article of Comparative Example I exhibits substantially lesser transverse mechanical properties than composite articles formed in accordance with the improved process of the present invention.

## EXAMPLE II

Example I is substantially repeated while employing a higher molecular weight polyetheretherketone thermoplastic polymer and a lesser quantity of a higher molecular weight polyacrylic acid binding agent (as described).

More specifically, 750 grams of solid particles of the higher molecular polyetheretherketone thermoplastic polymer are dry blended with 35 grams of solid particles of water-soluble polyacrylic acid binding agent possessing a molecular structure which is cross-linked with polyalkenyl polyether. The polyetheretherketone is commercially available from Imperial Chemical Industries, London, England, as Grade 450 KX1033 Victrex polymer, possesses a glass transition temperature is approximately 143° C., and possesses a melting temperature of approximately 343° C. The polyetheretherketone is ground to a mean particle size of 18 microns, with the largest particle size being 90 microns. The polyacrylic acid binding agent is commercially available from B.F. Goodrich as Grade 941 Carbopol polymer and has a molecular weight of approximately 1,250,000.

An alkyl phenoxypolyethoxy ethanol surfactant in a quantity of 2.5 grams is dissolved in 4143 grams of distilled water and the blend of solid particles of thermoplastic polymer and polyacrylic acid binding agent are added, while being agitated at a slow to moderate speed. The surfactant is commercially available from Rohm and Haas Company as Triton X100 surfactant. Such mixing is conducted for two hours in order to completely dissolve the polyacrylic acid binding agent and to disperse the particles of thermoplastic polymer. The pH of the resulting dispersion is found to be 3.2. The viscosity of the dispersion is found to be 140,000 cps. when measured with a Rheometrics Stress Rheometer (Model RSR/M) while operating at a shear rate of 0.01 reciprocal second. The Brookfield Yield Value of the dispersion is found to be 62 dynes/cm.$^2$ when tested on a Brookfield RVT viscometer as previously described.

70 grams of a 9.3 percent ammonium hydroxide solution next are added to ths dispersion while undergoing moderate agitation. This raises the pH of the dispersion to 6.4 to form an improved gelled impregnation bath wherein the viscosity of the resulting bath is substantially increased to approximately

1,100,000 cps. (as measured with a Rheometrics Stress Rheometer Model RSR/M at a shear rate of 0.01 reciprocal second) through an extension and stiffening of the molecules of the dissolved polyacrylic acid binding agent. The resulting impregnation bath exhibits plastic flow with shear-thinning behavior. The neutralization step results in a dramatic improvement of the binding and tackifying properties. The Brookfield Yield Value of the dispersion is found to be 330 dynes/cm.$^2$ when tested on a Brookfield RVT viscometer as previously described. It can be calculated as previously described that the Minimum Brookfield Yield Value required to suspend the largest particles of thermoplastic polymer present in the dispersion is 9.4 dynes/cm.$^2$. Accordingly, the resulting impregnation bath is highly stable and the actual Brookfield Yield Value exceeds the calculated Minimum Brookfield Value to suspend even the largest thermoplastic polymer particles present by more than 35 times.

In spite of the relatively high viscosity exhibited before and after the addition of the ammonium hydroxide solution, good dispersion of the particles and good impregnation of the substantially parallel filaments of carbon fibers was made possible by the shear-thinning behavior of the dispersion and the resulting impregnation bath.

It is found that the resulting sheet product following drying for two hours at ambient conditions to remove a portion of the water contains approximately 28.2 percent carbon fibers by weight, approximately 13.8 percent solid thermoplastic polymer particles by weight, approximately 0.6 percent ammonium polyacrylate binding agent having stiffened molecules possessing a cross-linked molecular structure by weight, and approximately 57.4 percent water by weight. This product contains the matrix-forming thermoplastic polymer particles substantially uniformly dispersed between adjoining fibers in the absence of fusion bonding and can be handled without the segregation of the particles. When tested in accordance with the drape test of ASTM D-1388 the product is found to be highly drapeable both in the 0° and 90° directions and to exhibit a flexural rigidity of approximately 10,000 mg.•cm. Also, the product is tacky and is found to pass the tack test of NASA Technical Bulletin 1142.

Next, the product while in a flat configuration is allowed to substantially completely dry to a water content of approximately 2 percent while at ambient conditions while containing the thermoplastic polymer particles well bound therein. Eleven flat plies containing approximately 32.8 percent by weight of the thermoplastic particles measuring approximately 10.2 cm. x 10.2 cm. are laid up in the 0° direction in a matched metal mold at room temperature conditions and placed in a platen press. The mold is heated to 365°C. with no applied pressure, and then a pressure of 2.1 MPa is applied while the temperature is allowed to increase to 415°C. The mold is then held at these conditions for approximately 30 minutes, after which the mold is transferred to another platen press where 2.1 MPa pressure is applied and the platens have ambient temperature water running through them. Once the mold cools to 50°C., it is removed from the press and the resulting composite article in the form of a panel is removed from the mold.

The resulting panel formed from the impregnated product has a thickness of 0.165 ± 0.001 cm., a theoretical carbon fiber volume of 59.9 percent, and a void content of less than 0.5 percent.

Alternatively, it would be possible to lay up the impregnated fibrous material prior to drying while still in the wet tacky form. Under such conditions the open mold containing the plies initially could be heated to approximately 120 to 150°C. for approximately 1 hour in the absence of pressure to further assist in the removal of volatiles. Such procedure would be particulary advantageous when forming a composite article of a more complex configuration wherein drape and tack are of greater importance.

Test specimens are cut from the panel and are evaluated in accordance with the procedures previously described. A 0° flexural strength of 1760 MPa is exhibited which represents a 76 percent translation of that theoretically attainable. A 0° flexural modulus of 128 GPa is exhibited which represents a 92 percent translation of that theoretically attainable. Finally, the 90° tensile test revealed a tensile strength of 70 MPa which represents an 81 percent translation of that theoretically attainable. Such 90° tensile strength facilitates the exhibition of outstanding transverse mechanical properties.

## EXAMPLE III

Example I is substantially repeated while using 88 grams of a 9.3 percent aqueous solution of methylamine rather than ammonium hydroxide as the base which is employed to substantially raise the pH of the aqueous medium, to extend and stiffen the molecules of the polyacrylic acid binding agent (as described), and to substantially increase the viscosity and tackiness of the impregnation bath. Substantially similar results are made possible.

Although the invention has been described with preferred embodiments, it is to be understood that

variations and modifications may be employed without departing from the concept of the invention as defined in the following claims.

## Claims

1. A method for the production of a fibrous material suitable for the formation of a substantially void-free composite article having improved transverse properties comprising a plurality of adjoining substantially parallel reinforcing filaments in association with a matrix-forming thermoplastic polymer comprising:

(a) preparing a dispersion of solid particles of a thermoplastic polymer in an aqueous medium which contains an effective amount of dissolved polyacrylic acid binding agent possessing a cross-linked molecular structure,

(b) raising the pH of said aqueous medium through the addition of a base selected from the group consisting of ammonia, an alkyl amine having a boiling point less than 100 °C., and mixtures of the foregoing, to form an impregnation bath wherein the viscosity of the resulting bath is substantially increased to at least 50,000 cps. through stiffening of the molecules of said binding agent and said impregnation bath has a plastic flow characteristic with shear-thinning behavior which is sufficient to substantially uniformly suspend said particulate thermoplastic polymer within said bath,

(c) impregnating said adjoining substantially parallel reinforcing filaments with said bath under conditions wherein said bath is caused to flow between said adjoining filaments by the application of work wherein said flow inherently results in a reduction of the viscosity of said bath which aids in the incorporation of said particulate thermoplastic between adjoining filaments, and

(d) controlling the content of said aqueous medium in the resulting fibrous material to provide a product having said particles of matrix-forming thermoplastic polymer substantially uniformly dispersed between adjoining filaments in the absence of fusion bonding.

2. A method in accordance with to Claim 1 wherein said plurality of adjoining substantially parallel reinforcing filaments are provided as a single end.

3. A method in accordance with Claim 1 wherein said fibrous material comprises a plurality of ends each comprising a plurality of substantially parallel reinforcing filaments.

4. A method in accordance with Claim 1 wherein said fibrous material is in the configuration of a cloth which incorporates a plurality of ends each comprising a plurality of substantially parallel reinforcing filaments.

5. A method in accordance with Claim 1 wherein said reinforcing filaments are selected from the group consisting of carbon, glass, aramid, silicon carbide, silicon nitride, boron nitride, and mixtures of the foregoing.

6. A method in accordance with Claim 1 wherein said solid particles of thermoplastic polymer possess a particle size within the range of approximately 0.1 to 100 microns.

7. A method in accordance with Claim 1 wherein said dissolved polyacrylic acid binding agent possessing a cross-linked molecular structure has a molecular weight of approximately 450,000 to 4,000,000.

8. A method in accordance with Claim 1 wherein said dissolved polyacrylic acid binding agent possessing a cross-linked molecular structure is provided in step (a) in a concentration of approximately 0.01 to 2 percent by weight based upon the total weight of the dispersion.

9. A method in accordance with Claim 1 wherein said dissolved polyacrylic acid binding agent is cross-linked with polyalkenyl polyether.

10. A method in accordance with Claim 1 wherein said dispersion of step (a) possesses a pH of approximately 2.5 to 3.5.

11. A method in accordance with Claim 1 wherein said base is dissolved in an aqueous solvent when added in step (b).

12. A method in accordance with Claim 1 wherein said base which is added in step (b) is an aqueous solution of ammonia.

13. A method in accordance with Claim 1 wherein in step (b) the pH is raised to approximately 4 to 10.

14. A method in accordance with Claim 1 wherein said solid particles of said thermoplastic polymer are provided in said dispersion of step (a) in a concentration of approximately 5 to 50 percent by weight based upon the total weight of the dispersion.

15. A method in accordance with Claim 1 wherein said dispersion provided in step (a) additionally includes a surfactant in a minor concentration to aid in the wetting of said particles of thermoplastic polymer.

16. A method in accordance with Claim 1 wherein said viscosity is raised at least 50 percent in step (b).

17. A method in accordance with Claim 1 wherein said impregnation bath formed in step (b) possesses a Brookfield Yield Value above the minimum value required to permanently suspend the largest particles of said thermoplastic polymer present in said bath.

18. A method in accordance with Claim 1 wherein said impregnation of step (c) is carried out while said reinforcing filaments are immersed in said bath and said work is applied as said filaments while under tension are passed in contact with at least one solid member.

19. A method in accordance with Claim 1 wherein in step (d) said concentration of aqueous medium in said resulting fibrous material is controlled within the range of approximately 10 to 70 percent by weight.

20. A method in accordance with Claim 1 wherein in step (d) said resulting fibrous material is dried to remove a portion of the aqueous medium.

21. A method in accordance with Claim 1 wherein in step (d) said resulting fibrous material is dried to remove at least a portion of the aqueous medium and additional aqueous medium subsequently is applied thereto in order to maintain the recited characteristics.

22. A method in accordance with Claim 1 wherein the product of step (d) contains said particles of matrix-forming thermoplastic polymer in a concentration of approximately 6 to 45 percent by weight.

23. A fibrous material suitable for the formation of a fiber-reinforced composite article having improved transverse properties comprising (a) a plurality of adjoining substantially parallel reinforcing filaments, (b) an effective amount of an ammonium or alkyl ammonium polyacrylate binding agent having stiffened molecules possessing a cross-linked molecular structure, (c) aqueous medium, (d) and solid particles of thermoplastic polymer substantially uniformly dispersed between adjoining filaments in the absence of fusion bonding, which inherently (1) is drapable and tacky at ambient conditions, (2) is handleable without segregation of said particles within the fibrous material, and (3) which upon the application of heat and pressure can be transformed into an improved substantially void-free composite article of a predetermined configuration which exhibits an improved 90° tensile strength wherein said solid particles form the matrix phase.

24. The improved fibrous material in accordance with Claim 23 wherein said reinforcing filaments are selected from the group consisting of carbon, glass, aramid, silicon carbide, silicon nitride, boron nitride, and mixtures of the foregoing.

25. Ths improved fibrous material in accordance with Claim 23 wherein said binding agent having stiffened molecules possessing a cross-linked molecular structure is an ammonium polyacrylate.

26. The improved fibrous material in accordance with Claim 23 wherein said thermoplastic polymer is selected from the group consisting of polyethylenes, polypropylenes, polyesters, polyamides, polyvinyl chlorides, polystyrenes, polycarbonates, polyoxymethylenes, and mixtures of the foregoing.

27. The improved fibrous material in accordance with Claim 23 wherein said thermoplastic polymer is a high performance engineering polymer which exhibits a glass transition temperature above 80° C and a melting temperature above 150° C.

28. The improved fibrous material in accordance with Claim 23 wherein said high performance engineering polymer exhibits a distinct molten phase when heated in the absence of a cross-linking agent.

29. The improved fibrous material in accordance with Claim 23 wherein said solid particles of said high performance engineering polymer exhibit sintering when heated and are capable of undergoing consolidation when adjoining particles are heated under pressure.

30. The improved fibrous material in accordance with Claim 23 wherein said high performance engineering polymer is selected from the group consisting of polysulfones, polyether sulfones, polyphenylene oxides, polyetherimides, anisotropic melt-forming polyesters, anisotropic melt-forming polyesteramides, anisotropic melt-forming polycarbonates, polycarbonates, polyimides, polyamideimides, polyimidesulfones, polyarylenesulfides, polyaryleneetherketones, and mixtures of the foregoing.

31. The improved fibrous material in accordance with Claim 23 wherein said solid particles of thermoplastic polymer possess a particle size within the range of approximately 0.1 to 100 microns.

32. The improved fibrous material in accordance with Claim 23 wherein said plurality of adjoining substantially parallel reinforcing filaments (a) are present in a concentration of approximately 15 to 55 percent by weight, said polyacrylate binding agent (b) is present in a concentration of approximately 0.02 to 2.2 percent by weight, said aqueous medium (c) is present in a concentration of approximately 10 to 70 percent by weight, and said solid particles of thermoplastic polymer (d) are present in a concentration of approximately 6 to 45 percent by weight.

33. The improved fibrous material in accordance with Claim 23 wherein said drapable character is evidenced by a flexural rigidity of less than 15,000 mg.•cm. when tested in accordance with ASTM D1388.

34. The improved fibrous material in accordance with Claim 23 which passes the tack test of NASA Technical Bulletin 1142.

35. The improved fibrous material in accordance with Claim 23 which upon the application of heat and pressure can be transformed into a substantially void-free composite article which exhibits a 0° flexural strength of at least 60 percent of the theoretical maximum when tested in accordance with ASTM D790.

36. The improved fibrous material in accordance with Claim 23 which upon the application of heat and pressure can be transformed into a substantially void-free composite article which exhibits a 90° tensile strength of at least 60 percent of the theoretical maximum when tested in accordance with ASTM D3039.